# EUROPEAN PATENT SPECIFICATION

(11) **EP 3 945 396 B1**
(45) Date of publication and mention of the grant of the patent: **23.04.2025**
(21) Application number: 21187642.0
(22) Date of filing: 26.07.2021
(51) Int. Cl.: G05D 1/622, G05D 109/22

(54) **DETECTING CONFLICT ALONG A ROUTE OF A ROBOT**
ERKENNUNG VON KONFLIKTEN ENTLANG EINER ROUTE EINES ROBOTERS
DÉTECTION DE CONFLITS LE LONG D'UN ITINÉRAIRE D'UN ROBOT

(30) Priority: 31.07.2020 US 202063059393 P; 13.01.2021 US 202117148127
(43) Date of publication of application: 02.02.2022
(73) Proprietor: Aurora Flight Sciences Corporation, a subsidiary of The Boeing Company, Manassas VA 20110 (US)
(72) Inventor: REAGAN, Margaret, Manassas, 20110 (US); SAUNDERS, Jeffery, Manassas, 20110 (US); BOSWORTH, William R, Manassas, 20110 (US)
(74) Representative: Boult Wade Tennant LLP

(56) References cited:
- US-A1- 2014 249 738
- US-A1- 2019 088 146
- US-A1- 2020 135 037
- ALBAKER B M ET AL: "Unmanned aircraft collision detection and resolution: Concept and survey", INDUSTRIAL ELECTRONICS AND APPLICATIONS (ICIEA), 2010 THE 5TH IEEE CONFERENCE ON, IEEE, PISCATAWAY, NJ, USA, 15 June 2010 (2010-06-15), pages 248 - 253, XP031713322, ISBN: 978-1-4244-5045-9
- LIN ZIJIE ET AL: "Fast 3D Collision Avoidance Algorithm for Fixed Wing UAS", JOURNAL OF INTELLIGENT, SPRINGER NETHERLANDS, DORDRECHT, vol. 97, no. 3-4, 29 June 2019 (2019-06-29), pages 577 - 604, XP037043201, ISSN: 0921-0296, [retrieved on 20190629], DOI: 10.1007/S10846-019-01037-7

## Description

### TECHNOLOGICAL FIELD

The present disclosure relates generally to robotics and, in particular, to one or more of the design, construction, operation or use of autonomous robots such as autonomous or semi-autonomous vehicles.

### BACKGROUND

Many modern robots and other machines are designed to operate with increased autonomy and are less reliant on well-trained operators to safely operate. Some of these modern robots are manned while others are unmanned. In particular, a variety of unmanned vehicles include unmanned ground vehicles (UGVs), unmanned aerial vehicles (UAVs), unmanned surface vehicles (USVs), unmanned underwater vehicles (UUVs), unmanned spacecraft and the like. The use of unmanned vehicles has grown in recent years and these unmanned vehicles are employed in a wide variety of applications, including both military and civilian uses.

One focus in the field of robotics is in the improvement of autonomy, which often includes multiple examples of robot operation. These examples of robot operation include automatic control of a given robot to support remote human control. Another example is optimization systems (and associated methods) to determine how, for a given robot or set of robots, tasks should be ordered and/or allocated. And yet another example of robot operation is automatic, real-time or near real-time data processing, and exploitation in support of automatic route planning, mission execution and other activities.

Despite advancements, existing autonomy systems are typically configured to address only one example of these activities, thereby focusing its design of the underling autonomy algorithms and software architecture on a narrow mission set. This limits the extensibility of existing autonomy systems, as they are not well-equipped to support the addition of new modules to the autonomy system. Furthermore, existing autonomy systems may or may not be structured for rapid adaptation to new platforms through parameterization.

Therefore it would be desirable to have a system and method that takes into account at least some of the issues discussed above, as well as other possible issues.

US 2014/0249738, in accordance with its abstract, states systems and methods are operable to maintain a proscribed self separation distance between an unmanned aircraft system (UAS) and an object. In an example system, consecutive intruder aircraft locations relative to corresponding locations of a self aircraft are determined, wherein the determining is based on current velocities of the intruder aircraft and the self aircraft, and wherein the determining is based on current flight paths of the intruder aircraft and the self aircraft. At least one evasive maneuver for the self aircraft is computed using a processing system based on the determined consecutive intruder aircraft locations relative to the corresponding locations of the self aircraft.

US 2019/0088146, in accordance with its abstract, states a method and a device for avoiding an object detect its approach to an aircraft. After detecting an object in the vicinity of an aircraft and detecting its approach, a first track for the object and a second track for the aircraft are estimated from successive first states for the object and successive second states for the aircraft. Thereafter, a minimum distance (dₘ) between the first track and the second track is estimated and a warning is triggered as soon as the minimum distance is less than a first threshold so as to warn a crew of the aircraft of a risk of collision. Finally, if the minimum distance is less than a second threshold, an avoidance maneuver is performed automatically by the aircraft in order to move away from the first track, and thereby avoid any risk of collision with the object.

Albaker B M et al: "Unmanned aircraft collision detection and resolution: Concept and survey", Industrial Electronics and Applications (ICIEA), 2010 The 5th IEEE Conference on, IEEE, Piscataway, NJ, USA, 15 June 2010, pages 248-253, in accordance with its abstract, states the utilization of unmanned aerial vehicles requires the ability to navigate in urban or unknown terrain where many moving and/or stationary obstacles of different types and sizes may endanger the safety of the mission. Large efforts have been addressed to resolve conflicts to unmanned aircraft. This paper explores the fundamental concept and presents an up-to-date survey of the collision sensing, detection and resolution methods those deployed for aircraft, especially for unmanned aerial vehicles. The collision avoidance concept is demonstrated through proposing generic functions carried by collision avoidance systems with special emphasis on the context aware implementation. These functions are then presented together with design factors that are used then to classify major collision avoidance methods.

Lin Zijie et al: "Fast 3D Collision Avoidance Algorithm for Fixed Wing UAS", Journal of Intelligent, Springer Netherlands, Dordrecht, vol. 97, no. 3-4, 29 June 2019, pages 577-604, in accordance with its abstract, states that this paper presents an efficient 3D collision avoidance algorithm for fixed wing Unmanned Aerial Systems (UAS). The algorithm increases the ability of aircraft operations to complete mission goals by enabling fast collision avoidance of multiple obstacles. The new algorithm, which is named Fast Geometric Avoidance algorithm (FGA), combines geometric avoidance of obstacles and selection of a critical avoidance start time based on kinematic considerations, collision likelihood, and navigation constraints. In comparison to a current way-point generation method, FGA showed a 90% of reduction in computational time for the same obstacle avoidance scenario. Using this algorithm, the UAS is able to avoid static and dynamic obstacles while still being able to recover its original trajectory after successful collision avoidance. Simulations for different mission scenarios show that this method is much more efficient at avoiding multiple obstacles than previous methods. Algorithm effectiveness validation is provided with Monte Carlo simulations and flight missions in an aircraft simulator. FGA was also tested on a fixed-wing aircraft with successful results. Because this algorithm does not have specific requirements on the sensor data types it can be applied to cooperative and non-cooperative intruders.

US 2020/135037, in accordance with its abstract, states an anti-collision device of an aircraft comprising a plurality of sensors, the plurality of sensors comprising at least two separate sensors, each sensor being configured to respectively deliver its own set of captured data as a function of the proximity of at least one obstruction, the anti-collision device comprising: at least one data homogenization module configured to transform at least one set of captured data in a corresponding set of unmarked data, each set of unmarked data respectively associated with at least one sensor being made up of a plurality of identical data types from one set of unmarked data to another, and a data processing module configured to generate, from said sets of unmarked data, at least one piece of information representative of the presence or absence of obstruction(s).

### BRIEF SUMMARY

There is described herein a method, optionally a computer-implemented method, of detecting conflict along a route for a robot to travel, the method comprising: receiving first data that indicate a first position and a first velocity of one or more nearby moving objects, or from which the first position and the first velocity of the one or more nearby moving objects are determined. The first data comprise sensor data acquired by a variety of different sensors, and are filtered and/or correlated from multiple observations of the one or more nearby moving objects. For each nearby moving object of the one or more nearby moving objects, the method comprises: generating a vector projection of the nearby moving object from the first position and using the first velocity of the nearby moving object, wherein the vector projection corresponds to a predicted trajectory of the nearby moving object; generating a trajectory of the robot on the route for the robot to travel, wherein the trajectory is generated from second data that indicate a second position and a second velocity of the robot; performing a comparison of the nearby moving object and the robot on respectively the predicted trajectory of the nearby moving object and the trajectory of the robot, wherein the comparison is performed to detect a conflict when the nearby moving object is within a clear region that includes the robot, and a time to closest point of approach between nearby moving object and the robot is less than a time threshold value; and, when the conflict is detected, outputting an indication of the conflict for use in at least one of guidance, navigation or control of the robot to avoid the conflict. Performing the comparison includes performing a stepwise comparison that includes a plurality of timesteps, and the clear region is dynamic in size to account for sensor uncertainty in one or more sensors of the variety of different sensors and in that the clear region is different in size for a later one of the plurality of timesteps relative to an earlier one of the plurality of timesteps to account for uncertainty in the first data.

The present disclosure thus includes, without limitation, the following unclaimed examples.

There is provided a method of detecting conflict along a route for a robot to travel, the method comprising receiving first data that indicates a first position and a first velocity of one or more nearby moving objects, or from which the first position and the first velocity of the one or more nearby moving objects are determined; and for each nearby moving object of the one or more nearby moving objects, generating a vector projection of the nearby moving object from the first position and using the first velocity of the nearby moving object, the vector projection corresponding to a predicted trajectory of the nearby moving object; generating a trajectory of the robot on the route for the robot to travel, and from second data that indicates a second position and a second velocity of the robot; performing a comparison of the nearby moving object and the robot on respectively the predicted trajectory of the nearby moving object and the trajectory of the robot, the comparison performed to detect a conflict when the nearby moving object is within a clear region that includes the robot, and a time to closest point of approach between nearby moving object and the robot is less than a time threshold value; and when the conflict is detected, outputting an indication of the conflict for use in at least one of guidance, navigation or control of the robot to avoid the conflict.

The route for the robot to travel may be described by at least one of a route command, a flight plan or a mission route, and generating the trajectory of the robot may include generating the trajectory of the robot using the at least one of the route command, the flight plan or the mission route.

Receiving the first data may comprise receiving the first data from a sensor operatively in communication with the robot and having a first data format, or data-linked from the nearby moving object and having a second data format; and transforming the first data from the first data format or the second data format to a third data format from which the vector projection and thereby the predicted trajectory of the nearby moving object is generated.

The method may further comprise applying the first data to a filter that passes the first data for generating the vector projection only when the first position of the nearby moving object is within a given region of interest that includes the robot at the second position.

The first data may further indicate a time and an accuracy of the first data, and the method may further comprise applying the first data to a filter that passes the first data for generating the vector projection only when the time is within a time threshold of current time, and the accuracy is within an accuracy threshold.

The first position and the first velocity may be observations of position and velocity, and receiving the first data may comprise receiving data from multiple sources including respective observations of position and velocity of the one or more nearby moving objects; correlating the respective observations of position and velocity; and based on the respective observations having at least a threshold degree of correlation that indicates the respective observations are for the nearby moving object, selecting an observation of position and velocity from the respective observations as the respectively first position and the first velocity of the nearby moving object.

The first data may further indicate accuracies of the respective observations of position and velocity, and selecting the observation may include selecting the observation that is most accurate as indicated by a highest one of the accuracies. The one or more nearby moving objects may be a plurality of nearby moving objects, and wherein the method may further comprise applying the first data to a filter that passes the first data for generating the vector projection for only a given number of the plurality of nearby moving objects, and the vector projection and thereby the predicted trajectory of the nearby moving object is generated for each nearby moving object.

Performing the comparison includes performing a stepwise comparison that includes a plurality of timesteps, and the clear region is dynamic in size in that the clear region is different in size for a later one of the plurality of timesteps relative to an earlier one of the plurality of timesteps.

The method may further comprise determining at least one maneuver to avoid the conflict; and causing the robot to execute the at least one maneuver.

There is also provided an apparatus for detecting conflict along a route for a robot to travel, the apparatus comprising a memory having computer-readable program code stored therein; and processing circuitry configured to access the memory, and execute the computer-readable program code to cause the apparatus to perform any of the methods described above.

There is also provided a computer-readable storage medium for detecting conflict along a route for a robot to travel, the computer-readable storage medium being non-transitory and having computer-readable program code stored therein that, in response to execution by processing circuitry, causes an apparatus to perform any of the methods described above.

These and other features and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example described herein. This disclosure is intended to be read holistically such that any separable features or elements of the disclosure, in any of its examples, should be viewed as combinable unless the context of the disclosure clearly dictates otherwise.

It will therefore be appreciated that this Brief Summary is provided merely for purposes of summarizing some examples so as to provide a basic understanding of the disclosure. Accordingly, it will be appreciated that the above described examples should not be construed to narrow the scope of the disclosure in any way. Other examples and advantages will become apparent from the following detailed description taken in conjunction with the accompanying figures which illustrate, by way of example, the principles of some described examples.

### BRIEF DESCRIPTION OF THE FIGURE(S)

Having thus described examples of the disclosure in general terms, reference will now be made to the accompanying figures, which are not necessarily drawn to scale, and wherein:
FIG. 1 illustrates one type of robot, namely, an unmanned aerial vehicle;
FIG. 2 illustrates a system;
FIG. 3 more illustrates a mission management system (MMS);
FIG. 4 illustrates a scenario in which the robot is executing a mission in which the robot is to travel on a route in an environment in which one or more moving objects are nearby the robot;
FIG. 5 is a diagram of services that may be implemented by the MMS for conflict detection and avoidance with respect to one or more nearby moving objects;
FIG. 6 is a diagram of a simulated track management service that may be implemented by the MMS;
FIGS. 7A, 7B, 7C, 7D and 7E are flowcharts illustrating various steps in a method of detecting conflict along a route for a robot to travel; and
FIG. 8 illustrates an apparatus.

### DETAILED DESCRIPTION

Some examples of the present disclosure will now be described more fully hereinafter with reference to the accompanying figures, in which some, but not all examples of the disclosure are shown. Indeed, various examples of the disclosure may be embodied in many different forms and should not be construed as limited to the examples set forth herein; rather, these examples are provided so that this disclosure will be thorough and complete, and will fully convey the scope of the disclosure to those skilled in the art. For example, unless specified otherwise or clear from context, references to first, second or the like should not be construed to imply a particular order. A feature may be described as being above another feature (unless specified otherwise or clear from context) may instead be below, and vice versa; and similarly, features described as being to the left of another feature else may instead be to the right, and vice versa. As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Like reference numerals refer to like elements throughout. Furthermore, it should be understood that unless otherwise specified, the terms "data," "content," "digital content," "information," and similar terms may be at times used interchangeably.

Examples of the present disclosure relate to robotics and, in particular, to one or more of the design, construction, operation or use of robots. As used herein, a robot is a machine designed and configurable to execute maneuvers in its environment. The robot may be manned or unmanned. The robot may be fully human-controlled, or the robot may be semi-autonomous or autonomous in which at least some of the maneuvers are executed independent of or with minimal human intervention. In some examples, the robot is operable in various modes with various amounts of human control.

A robot designed and configurable to fly may at times be referred to as an aerial robot. A robot designed and configurable to operate with at least some level of autonomy may at times be referred to as an autonomous robot, or an autonomous aerial robot in the case of an autonomous robot that is also designed and configurable to fly. Examples of suitable robots include aerobots, androids, automatons, autonomous vehicles, explosive ordnance disposal robots, hexapods, industrial robots, insect robots, microbots, nanobots, military robots, mobile robots, rovers, service robots, surgical robots, walking robots and the like. Other examples include a variety of unmanned vehicles, including unmanned ground vehicles (UGVs), unmanned aerial vehicles (UAVs), unmanned surface vehicles (USVs), unmanned underwater vehicles (UUVs), unmanned spacecraft and the like. These may include autonomous cars, planes, trains, industrial vehicles, fulfillment center robots, supply-chain robots, robotic vehicles, mine sweepers, and the like.

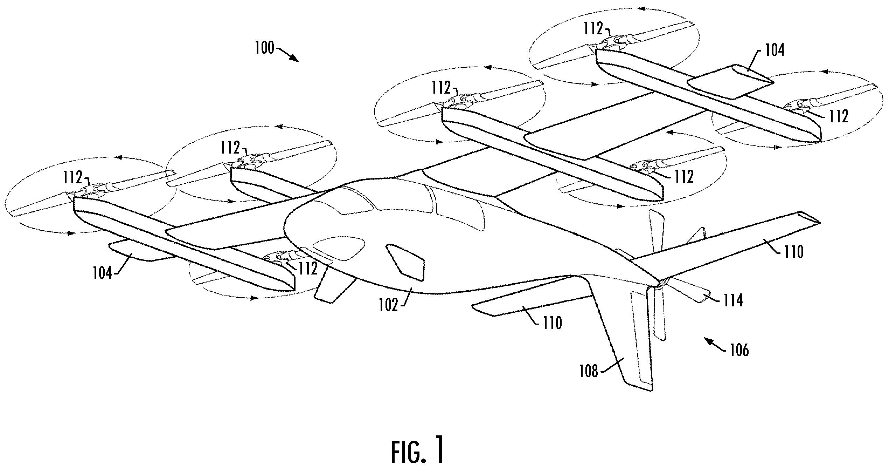

FIG. 1 illustrates one type of robot, namely, a UAV 100, that may benefit from examples of the present disclosure. As shown, the UAV may include a fuselage 102, wings 104 extending from opposing sides of the UAV in a mid-section of the fuselage, and an empennage or tail assembly 106 at a rear end of the fuselage. The tail assembly includes a vertical stabilizer 108 and two horizontal stabilizers 110 extending from opposing sides of the UAV. Rotors 112 and 114 are mounted to respectively the wings and the end of the tail assembly for lifting and propelling the UAV during flight.

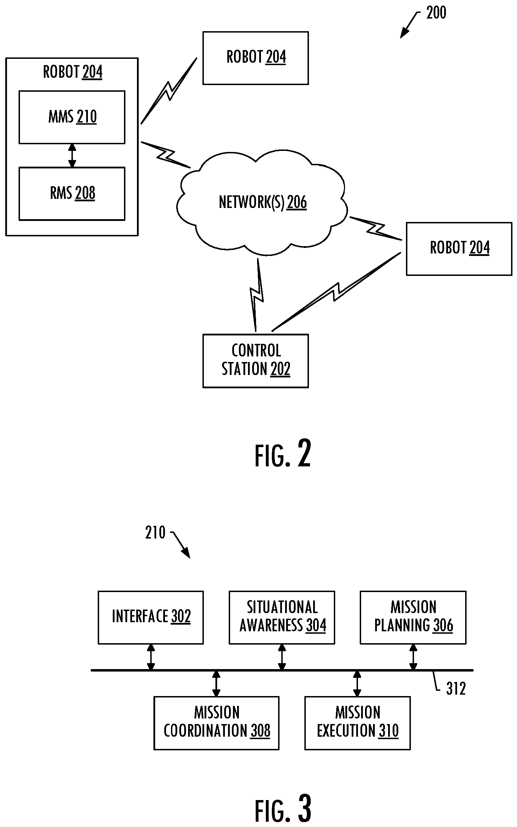

FIG. 2 illustrates a system 200 according to some examples of the present disclosure. The system may include any of a number of different subsystems (each an individual system) for performing one or more functions or operations. As shown, in some examples, the system includes a control station 202 and one or more robots 204 (e.g., one or more UAVs 100). The control station provides facilities for communication with or control of the one or more robots, such as by wired or wireless data links directly or across one or more networks 206. In some examples, the control station may be a ground station, and not in all cases control the robots. In this regard, the control station may be configured to monitor the robots. The control station may initiate mission, but the control station may not control the robots to maneuver. At times, then, the control station may enable or provide a distributed network/server of software functions.

The robot 204 includes a robot management system (RMS) 208 and a mission management system (MMS) 210. The RMS is a robot-specific subsystem configured to manage subsystems and other components of the robot. These subsystems and other components include, for example, maneuver controls, landing gear, onboard environmental systems, electrical, pneumatic and hydraulic systems, communications systems, navigation systems and other subsystems and components for controlling operation and maneuvering of the robot. The RMS is configured to accept maneuver commands such as waypoints and/or steering commands, and control the robot to follow those maneuver commands. In the context of a vehicle, the RMS is at times referred to as a vehicle management system (VMS).

The MMS **210** is a subsystem configured to manage missions of the robot **204.** A mission is a deployment of the robot (one or more robots) to achieve one or more mission objectives. A mission may be decomposed into maneuvers of the robot with optional sensor and/or effector scheduling, and the MMS may execute tasks to manage the robot to execute maneuvers with specific parameters and capabilities. The MMS **210** includes subsystems to process sensor data to situational awareness, plan tasks for the robot **204** (or multiple robots), coordinate with teams to assign tasks, execute assigned tasks. The MMS is also configured to interface with the RMS **208,** and in some examples the control station **202.** Although the MMS is shown on the robot **204,** the MMS may instead be at the control station; or in some examples, the MMS may be distributed between the robot and the control station.

In some examples, the MMS **210** provides a complete, end-to-end autonomy architecture with open system architecture standards and parameterized to allow rapid extension and reapplication to a variety of robots. The flexibility of the MMS enables an operator to code it once, but to apply it anywhere. The MMS may therefore be applied to virtually any robot that applies, or benefits from, autonomy. The MMS may include an adaptable autonomy architecture that is applicable to a variety of robots, including those identified above. A benefit of the MMS is therefore not only in the specific contents, but also in the specific details of the architecture, its subroutines, and in the interfaces between those subroutines and other systems/devices that support rapid extensibility and adaptability of the MMS to a variety of domains.

FIG. 3 more particularly illustrates the MMS **210** according to some examples of the present disclosure. The MMS may include any of a number of different subsystems (each an individual system) for performing one or more functions or operations. As shown, in some examples, the MMS includes an interface subsystem **302,** a situational awareness subsystem **304,** a mission planning subsystem **306,** a mission coordination subsystem **308,** and a mission execution subsystem **310.** As suggested above, in some examples, the subsystems of the MMS may be on the robot **204,** at the control station **202,** or distributed between the robot and the control station. The subsystems may be configured to communicate with one another directly, over a communication bus **312,** or across the network(s) **206** in examples in which the MMS is distributed between the robot and the control station.

The subsystems enable the MMS **210** of the robot **204** to interface with the system **200,** perform situational awareness, plan a mission including a plurality of tasks, coordinate the plurality of tasks and thereby the mission with other robots **204,** and execute the mission. For example, the MMS may use the interface subsystem **302** to interface with various sensors onboard the robot, the RMS **208,** the control station **202** and/or other robots. The MMS may use the situational awareness subsystem **304** to acquire sensor data and maintain an awareness of the state of the environment in which the robot is operating. The MMS may use the mission planning subsystem **306** to plan a mission including or associated with a plurality of tasks, and which may incorporate rules of engagement, tactics and other constraints on operations. The MMS may likewise use the mission planning subsystem to dynamically replan a mission in which changes to the mission are made in real-time or near real-time as the mission is executed. The MMS may use the mission coordination subsystem **308** to coordinate the plurality of tasks of the mission with other robots and users, where agreed-upon tasks may then be executed by the MMS using the mission execution subsystem **310.**

According to some examples of the present disclosure, the MMS **210** is also configured to implement software functionality or functionalities (at times referred to as services) during a mission to provide the robot **204** with conflict detection and avoidance capabilities. During a mission, the robot may take a path, and this path may be described by a series of waypoints that define a route the robot will travel. The robot travels with a velocity (speed and direction of motion), and the series of waypoints and velocities at that define the route with respect to time defines a trajectory of the robot (at times referred to as a track of the robot). The conflict detection and avoidance capabilities enable the robot to detect and avoid conflicts along its route of travel.

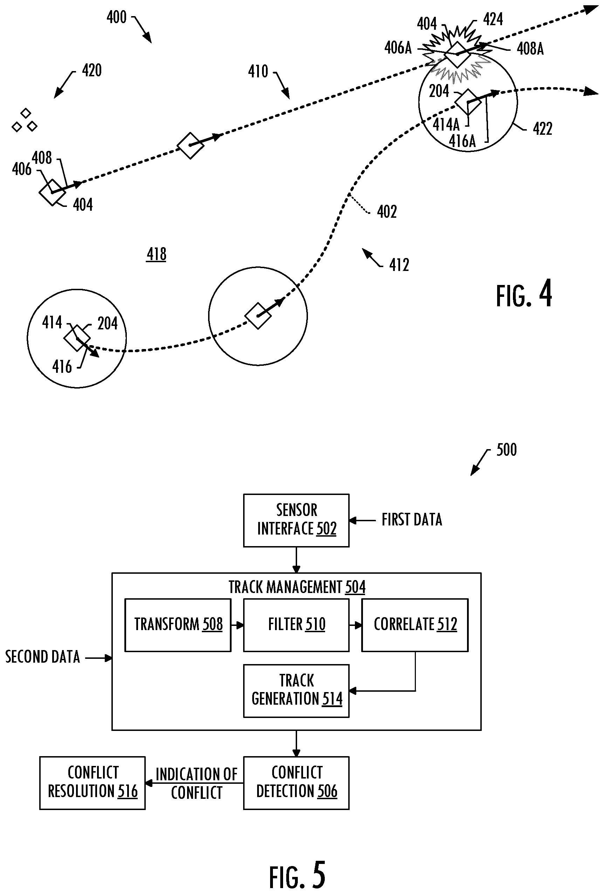

FIG. 4 illustrates a scenario **400** in which the robot **204** is executing a mission in which the robot is to travel on a route **402** in an environment in which one or more moving objects **404** are nearby the robot. In some examples, these moving objects are other robots that may be of the same type or different types than the robot. Other examples of suitable moving objects include non-robot vehicles such as any of a number of different types of ground vehicles, watercraft, aircraft, spacecraft or the like.

FIG. 5 is a diagram of services **500** that may be implemented by the MMS **210** for conflict detection and avoidance with respect to nearby moving objects **404,** according to some examples. As shown, the services may include a sensor interface **502** service, track management **504** service and conflict detection **506** service. In some examples, the sensor interface service may be implemented by the interface subsystem **302** of the MMS. Also in some examples, the track management service and the conflict detection service may be implemented by respective ones of the situational awareness subsystem **304** and the mission execution subsystem **310** of the MMS.

According to examples, the sensor interface **502** service is configured to receive first data that indicates a first position **406** and a first velocity **408** of the nearby moving object(s) **404,** or the first position and the first velocity are determined from the first data. The first data may include sensor data from any of a number of different sensors including those employing technologies such as acoustics, radio, optics and the like. More particular examples of suitable sensors include those employing radar, lidar, infrared sensors, cameras and the like. Another example of a suitable sensor in the context of an aerial robot is an automatic, dependent surveillance-broadcast (ADS-B) receiver configured to receive ADS-B signals. In some examples, the first data is from a sensor operatively in communication with the robot **204** and has a first data format (e.g., radar), or data-linked from the nearby moving object(s) **404** and having a second data format (e.g., ADS-B).

A number of sensors such as those employing radar, lidar, infrared sensors, cameras and the like generate images from reflected electromagnetic waves (e.g., radio, infrared radiation, visible light) or mechanical waves (e.g., sound waves). These images may be used to detect the presence and position of a nearby moving object **404**; and in some examples, the nearby moving object may also be identified. The images may also be used to track the nearby moving object using multiple sequential detections over time, which may in turn be used to determine its velocity.

ADS-B is a surveillance technology for tracking aircraft that uses satellite-based navigation technology and a broadcast communications data-link (ADS-B unit). A nearby moving object **404** that is an ADS-B capable aircraft may use a satellite-based navigation receiver to derive its precise position from satellites, and combine that position with state information such as velocity, altitude and flight number. The nearby moving object / aircraft may then broadcast this information via an ADS-B signal to other ADS-B capable systems, which may include the robot **204.**

The track management **504** service and the conflict detection **506** service are configured to perform a number of operations for each nearby moving object **404** of the nearby moving object(s). In various examples, the track management service includes one or more sub-services (each an individual service) such as a transform **508** service, a filter **510** service, a correlate **512** service and/or a track generation **514** service. The track generation service is configured to generate a vector projection of the first velocity **408** of the nearby moving object from the first position **406** of the nearby moving object. This vector projection corresponds to a predicted trajectory **410** of the nearby moving object.

The track generation **514** service of the track management **504** service is also configured to generate a trajectory **412** of the robot **204** on the route **402,** from second data that indicates a second position **414** and a second velocity **416** of the robot. The second data may include state data that describes position and velocity of the robot, and which in some examples may be received from the RMS **208.** In some examples, the route for the robot is described by a route command, a flight plan (for an aerial robot) and/or a mission route; and in some of these examples, the trajectory of the robot is generated using the route command, the flight plan and/or the mission route. In this regard, the route in some examples is a planned route of the robot.

In some examples in which the first data has a first data format or a second data format, the transform **508** service is configured to transform the first data to a third data format. The filter **510** service is configured to apply the first data to one or more filters before the vector projection for the predicted trajectory **410** is generated. In some examples, the filter service is configured to apply the first data to a filter that passes the first data for generation of the vector projection only when the first position **406** of the nearby moving object **404** is within a given region of interest **418** that includes the robot **204** at the second position **414.** In some examples, the first data further indicates a time and an accuracy of the first data, and the filter service is configured to apply the first data to a filter that passes the first data for generation of the vector projection only when the time is within a time threshold of current time, and the accuracy is within an accuracy threshold. In some examples in which there are a plurality of nearby moving objects **420,** and the filter **510** service is configured to apply the first data to a filter that passes the first data for generation of the vector projection for only a given number of the plurality of nearby moving objects.

In some examples, the first position **406** and the first velocity **408** of the nearby moving object **404** are observations of position and velocity, and the first data includes data from multiple sources including respective observations of position and velocity of the nearby moving object(s). The correlate **512** service is configured to correlate the respective observations of position and velocity; and in some examples, the respective observations have at least a threshold degree of correlation that indicates the respective observations are for the nearby moving object (e.g., a single nearby moving object that is the nearby moving object). Based on this threshold degree of correlation, the correlate service is configured to select an observation of position and velocity from the respective observations as the respectively first position and the first velocity of the nearby moving object. In some further examples, the first data further indicates accuracies of the respective observations of position and velocity, and the correlate service is configured to select the observation that is most accurate as indicated by a highest one of the accuracies.

The conflict detection **506** service of the services **500** that may be implemented by the MMS **210** is configured to perform a comparison of the nearby moving object **404** and the robot **204** on respectively the predicted trajectory **410** of the nearby moving object and the trajectory **412** of the robot. The comparison is performed to detect a conflict when the nearby moving object is within a clear region **422** that includes the robot, and a time to closest point of approach between nearby moving object and the robot is less than a time threshold value.

In some examples, conflict detection **506** service is configured to perform a stepwise comparison. In some of these examples, for a timestep of a plurality of timesteps (or for each timestep), the conflict detection service is configured to determine updated positions **406A, 414A** and updated velocities **408A, 416A** of the nearby moving object and the robot on respectively the predicted trajectory of the nearby moving object and the trajectory of the robot.

For the nearby moving object **404** and the robot **204** at respective ones of the updated positions **406A, 414A** and the updated velocities **408A, 416A,** the conflict detection **506** service is configured to determine if the nearby moving object is within a clear region **422** that includes the robot. The conflict detection service is also configured to determine if a time to closest point of approach between nearby moving object and the robot is less than a time threshold value. The clear region in various examples may be referred to as a well-clear region, boundary, violation volume or the like. The clear region is dynamic in size in that the clear region is different in size for a later one of the plurality of timesteps relative to an earlier one of the plurality of timesteps. This accommodates for uncertainty in the first data, and may accommodate for distance in the future the conflict may occur, and the like.

The conflict detection **506** service is configured to detect a conflict **424** when the nearby moving object **404** is within the clear region **422,** and the time to closest point of approach is less than the time threshold value. When the conflict is detected, the conflict detection service is configured to output an indication of the conflict for use in at least one of guidance, navigation or control of the robot to avoid the conflict. In some examples, the services **500** that may be implemented by the MMS **210** for conflict and detection may further include a conflict resolution **516** service, which may more particularly be implemented by the mission execution subsystem **310** of the MMS. In some of these examples, the conflict resolution service is configured to determine at least one maneuver to avoid the conflict, and the MMS is configured to cause the robot **204** to execute the at least one maneuver. This may include the MMS configured to send one or more maneuver commands to the RMS **208** to control the robot to follow the maneuver commands and thereby execute the at least one maneuver.

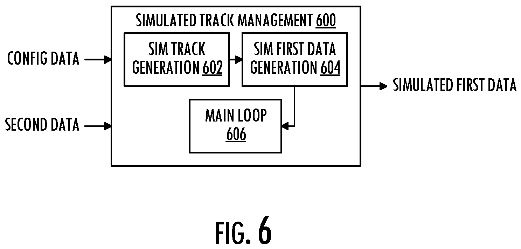

In some examples of the present disclosure, it may be useful to supply various services that may be implemented by the MMS **210** with simulated data that indicates position and velocity of one or more simulated moving objects. These services may include the services **500** for conflict detection and avoidance in which case the simulated data may be simulated first data received and processed in a manner similar to the first data as described above. FIG. 6 illustrates a simulated track management **600** service that may be implemented by the MMS such as by the mission planning subsystem **306** or the mission execution subsystem **310,** according to some examples.

As shown, the simulated track management **600** service includes one or more sub-services (each an individual service) such as a simulated track generation **602** service, a simulated first data generation **604** service and/or a main loop **606** service. The simulated track generation service is configured to generate a trajectory of a simulated moving object, which may be defined by a series of waypoints (positions) and velocities of the simulated moving object. The trajectory of the simulated moving object may follow a random route, or the route may be pre-defined and provided by configuration data. In some examples, a conflict may be specified for the simulated moving object; and in some of these examples, the simulated track generation service may generate the trajectory of the simulated moving object further using a route of the robot **204,** and/or the state data that describes the position and velocity of the robot, and that may be provided by the second data.

The simulated first data generation **604** service is configured to generate simulated first data from the trajectory of the simulated moving object. Similar to the first data described above, the simulated first data indicates position and velocity of the simulated moving object, or the position and the velocity are determined from the simulated first data. The simulated first data may be formatted as sensor data (e.g., radar, lidar, infrared sensor, camera, ADS-B) and expressed in any of a number of data formats (e.g., first data format, second data format). In some examples, the simulated first data may further include an amount of acceptable noise that may otherwise be expected of the first data.

The main loop **606** service is configured to publish the simulated first data such as for other services (e.g., services **500**). In some examples, the main loop service is configured to publish the simulated first data based on the route of the robot **204,** and/or the state data that describes the position and velocity of the robot. In this regard, the main loop service may publish the simulated first data when the position of the simulated moving object is within the given region of interest **418** that includes the robot, or when the simulated moving object is otherwise considered nearby the robot.

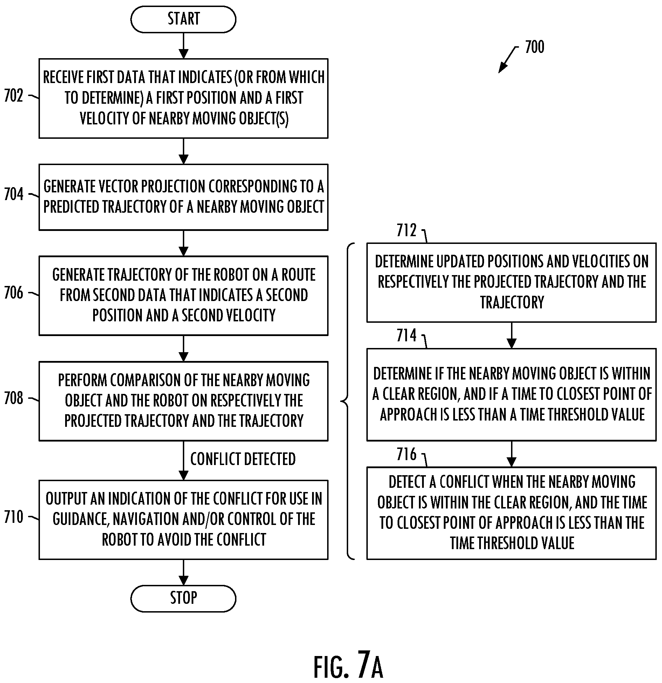

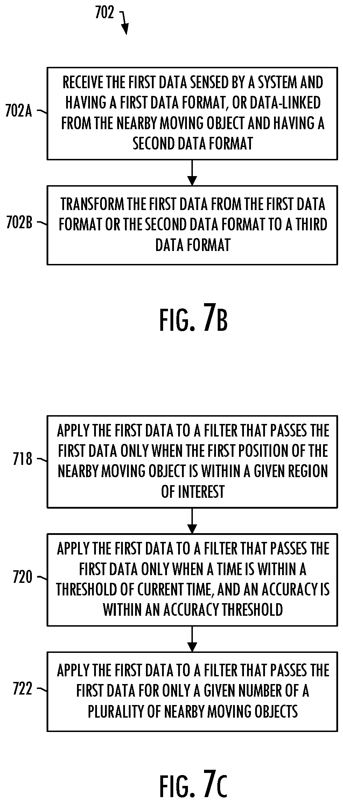

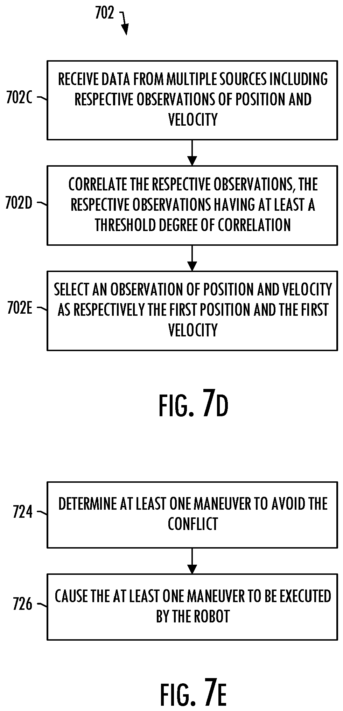

FIGS. 7A, 7B, 7C, 7D and 7E are flowcharts illustrating various steps in a method **700** of detecting conflict along a route for a robot to travel, according to examples of the present disclosure. As shown at block **702** of FIG. 7A, the method includes receiving first data that indicates a first position and a first velocity of one or more nearby moving objects, or from which the first position and the first velocity of the one or more nearby moving objects are determined. The method then includes a number of steps for each nearby moving object of the one or more nearby moving objects. In this regard, the method includes generating a vector projection of the nearby moving object from the first position and using the first velocity of the nearby moving object, the vector projection corresponding to a predicted trajectory of the nearby moving object, as shown at block **704.**

The method **700** includes generating a trajectory of the robot on the route for the robot to travel, and from second data that indicates a second position and a second velocity of the robot, as shown at block **706.** In some examples, the route for the robot to travel is described by at least one of a route command, a flight plan or a mission route; and in some of these examples, the trajectory of the robot is generated using the at least one of the route command, the flight plan or the mission route.

As shown at block **708,** the method **700** includes performing a comparison of the nearby moving object and the robot on respectively the predicted trajectory of the nearby moving object and the trajectory of the robot. The comparison is performed to detect a conflict when the nearby moving object is within a clear region that includes the robot, and a time to closest point of approach between nearby moving object and the robot is less than a time threshold value. The method then includes, when the conflict is detected, outputting an indication of the conflict for use in at least one of guidance, navigation or control of the robot to avoid the conflict, as shown at block **710.**

In some examples, performing the comparison at block **708** includes performing a stepwise comparison that includes a plurality of timesteps. In some of these examples, a timestep of a plurality of timesteps, the stepwise comparison includes determining updated positions and updated velocities of the nearby moving object and the robot on respectively the predicted trajectory of the nearby moving object and the trajectory of the robot, as shown at block **712.**

For the nearby moving object and the robot at respective updated positions and the updated velocities, the stepwise comparison includes determining if the nearby moving object is within a clear region that includes the robot, and if a time to closest point of approach between nearby moving object and the robot is less than a time threshold value, as shown at block **714.** In some examples, the clear region is dynamic in size in that the clear region is different in size for a later one of the plurality of timesteps relative to an earlier one of the plurality of timesteps. A conflict is detected when the nearby moving object is within the clear region, and the time to closest point of approach is less than the time threshold value, as shown at block **716.**

In some examples, receiving the first data at block **702** includes receiving the first data from a sensor operatively in communication with the robot and having a first data format, or data-linked from the nearby moving object and having a second data format, as shown at block **702A** of FIG. 7B. In some of these examples, the first data is transformed from the first data format or the second data format to a third data format from which the vector projection and thereby the predicted trajectory of the nearby moving object is generated, as shown at block **702B.**

Turning to FIG. 7C, in various examples, the first data may be applied to one or more filters before the vector projection and thereby the predicted trajectory of the nearby moving object is generated. In some examples, the first data is applied to a filter that passes the first data for generating the vector projection at block **704** only when the first position of the nearby moving object is within a given region of interest that includes the robot at the second position, as shown at block **718.** In some examples, the first data further indicates a time and an accuracy of the first data, and the first data is applied to a filter that passes the first data for generating the vector projection only when the time is within a time threshold of current time, and the accuracy is within an accuracy threshold, as shown at block **720.**

In some examples, the one or more nearby moving objects are a plurality of nearby moving objects, and the first data is applied to a filter that passes the first data for generating the vector projection at block **704** for only a given number of the plurality of nearby moving objects, as shown at block **722.** In some of these examples including a plurality of nearby moving objects, the vector projection and thereby the predicted trajectory of the nearby moving object is generated for each nearby moving object.

In some examples, the first position and the first velocity are observations of position and velocity, and receiving the first data at block 702 includes receiving data from multiple sources including respective observations of position and velocity of the one or more nearby moving objects, as shown at block **702C** of FIG. 7D. The respective observations of position and velocity are correlated; and in some examples, the respective observations have at least a threshold degree of correlation that indicates the respective observations are for the nearby moving object, as shown at block **702D.** Based on this threshold degree of correlation, an observation of position and velocity is selected from the respective observations as the respectively first position and the first velocity of the nearby moving object, as shown at block **702E. In** some further examples, the first data further indicates accuracies of the respective observations of position and velocity, and the observation that is selected is the observation that is most accurate as indicated by a highest one of the accuracies.

**In** some examples, the method **700** further includes determining at least one maneuver to avoid the conflict, as shown at block **724** of FIG. 7E. The method, then, includes causing the robot to execute the at least one maneuver, as shown at block **726.**

According to examples of the present disclosure, the MMS **210** and its subsystems including the interface subsystem **302,** situational awareness subsystem **304,** mission planning subsystem **306,** mission coordination subsystem **308** and mission execution subsystem **310** may be implemented by various means. Means for implementing the MMS and its subsystems may include hardware, alone or under direction of one or more computer programs from a computer-readable storage medium. In some examples, one or more apparatuses may be configured to function as or otherwise implement the MMS and its subsystems shown and described herein. In examples involving more than one apparatus, the respective apparatuses may be connected to or otherwise in communication with one another in a number of different manners, such as directly or indirectly via a wired or wireless network or the like.

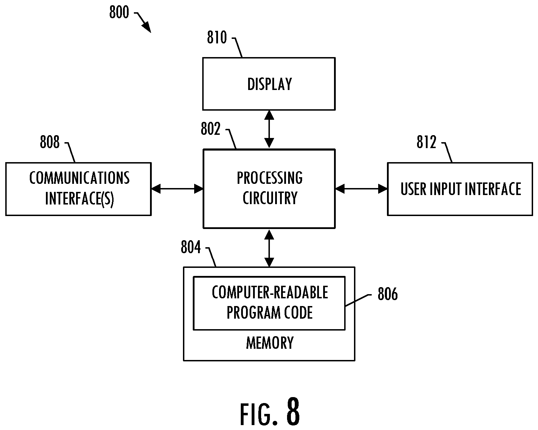

FIG. 8 illustrates an apparatus **800** according to some examples of the present disclosure. An exemplary apparatus of the present disclosure may comprise, include or be embodied in one or more fixed or portable electronic devices. The apparatus may include one or more of each of a number of components such as, for example, processing circuitry **802** (e.g., processor unit) connected to a memory **804** (e.g., storage device).

The processing circuitry **802** may be composed of one or more processors alone or in combination with one or more memories. The processing circuitry may be any piece of computer hardware that is capable of processing information such as, for example, data, computer programs and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the memory **804** (of the same or another apparatus).

The processing circuitry **802** may be a number of processors, a multi-core processor or some other type of processor, depending on the particular implementation. Further, the processing circuitry may be implemented using a number of heterogeneous processor systems in which a main processor is present with one or more secondary processors on a single chip. As another illustrative example, the processing circuitry may be a symmetric multi-processor system containing multiple processors of the same type. In yet another example, the processing circuitry may be embodied as or otherwise include one or more ASICs, FPGAs or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to examples of the present disclosure.

The memory **804** may be any piece of computer hardware that is capable of storing information such as, for example, data, computer programs (e.g., computer-readable program code **806**) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may refer to a computer-readable storage medium or computer-readable transmission medium.

In addition to the memory **804,** the processing circuitry **802** may also be connected to one or more interfaces for displaying, transmitting and/or receiving information. The interfaces may include a communications interface **808** (e.g., communications unit) and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

The user interfaces may include a display **810** and/or one or more user input interfaces **812** (e.g., input/output unit). The display may be configured to present or otherwise display information to a user, suitable examples of which include a liquid crystal display (LCD), light-emitting diode display (LED), plasma display panel (PDP) or the like. The user input interfaces may be wired or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

As indicated above, program code instructions may be stored in memory, and executed by processing circuitry that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, a processing circuitry or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of the program code instructions may be performed sequentially such that one instruction is retrieved, loaded and executed at a time. In some examples, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by a processing circuitry, or storage of instructions in a computer-readable storage medium, supports combinations of operations for performing the specified functions. In this manner, an apparatus **800** may include a processing circuitry **802** and a computer-readable storage medium or memory **804** coupled to the processing circuitry, where the processing circuitry is configured to execute computer-readable program code **806** stored in the memory. It will also be understood that one or more functions, and combinations of functions, may be implemented by special purpose hardware-based computer systems and/or processing circuitry which perform the specified functions, or combinations of special purpose hardware and program code instructions.

## Claims

1. A method (700), optionally a computer-implemented method, of detecting conflict (424) along a route (402) for a robot (204) to travel, the method (700) comprising:
receiving first data that indicate a first position (406) and a first velocity (408) of one or more nearby moving objects (404), or from which the first position (406) and the first velocity (408) of the one or more nearby moving objects (404) are determined, and wherein the first data comprise sensor data acquired by a variety of different sensors and are filtered and/or correlated from multiple observations of the one or more nearby moving objects (404); and
for each nearby moving object (404) of the one or more nearby moving objects (404):
generating a vector projection of the nearby moving object (404) from the first position (406) and using the first velocity (408) of the nearby moving object (404), wherein the vector projection corresponds to a predicted trajectory (410, 412) of the nearby moving object (404);
generating a trajectory (410, 412) of the robot (204) on the route (402) for the robot (204) to travel, wherein the trajectory (410, 412) is generated from second data that indicate a second position (414) and a second velocity (416) of the robot (204);
performing a comparison of the nearby moving object (404) and the robot (204) on respectively the predicted trajectory (410, 412) of the nearby moving object (404) and the trajectory (410, 412) of the robot (204), wherein the comparison is performed to detect a conflict (424) when the nearby moving object (404) is within a clear region (422) that includes the robot (204), and a time to closest point of approach between nearby moving object (404) and the robot (204) is less than a time threshold value; and,
when the conflict (424) is detected, outputting an indication of the conflict (424) for use in at least one of guidance, navigation or control of the robot (204) to avoid the conflict (424);
characteized in that
performing the comparison includes performing a stepwise comparison that includes a plurality of timesteps, and the clear region (422) is dynamic in size to account for sensor uncertainty in one or more sensors of the variety of different sensors and in that the clear region (422) is different in size for a later one of the plurality of timesteps relative to an earlier one of the plurality of timesteps to account for uncertainty in the first data.

2. The method (700) of claim 1, wherein the variety of different sensors comprise radar, lidar, infrared, camera or ADS-B sensors.

3. The method (700) of claim 1 or 2, wherein the route (402) for the robot (204) to travel is described by at least one of a route command, a flight plan or a mission route (402), and generating the trajectory (410, 412) of the robot (204) includes generating the trajectory (410, 412) of the robot (204) using the at least one of the route command, the flight plan or the mission route (402).

4. The method (700) of any of claims 1 thru 3, wherein receiving the first data comprises:
receiving the first data from a sensor operatively in communication with the robot (204) and having a first data format, or data-linked from the nearby moving object (404) and having a second data format; and
transforming the first data from the first data format or the second data format to a third data format from which the vector projection and thereby the predicted trajectory (410, 412) of the nearby moving object (404) is generated.

5. The method (700) of any of claims 1 thru 4 further comprising:
applying the first data to a filter (510) that passes the first data for generating the vector projection only when the first position (406) of the nearby moving object (404) is within a given region of interest (418) that includes the robot (204) at the second position (414).

6. The method (700) of any of claims 1 thru 5, wherein the first data further indicates a time and an accuracy of the first data, and the method (700) further comprises:
applying the first data to a filter (510) that passes the first data for generating the vector projection only when the time is within a time threshold of current time, and the accuracy is within an accuracy threshold.

7. The method (700) of any of claims 1 thru 6, wherein the first position (406) and the first velocity (408) are observations of position and velocity, and receiving the first data comprises:
receiving data from multiple sources including respective observations of position and velocity of the one or more nearby moving objects (404);
correlating the respective observations of position and velocity; and,
based on the respective observations having at least a threshold degree of correlation that indicates the respective observations are for the nearby moving object (404), selecting an observation of position and velocity from the respective observations as the respectively first position (406) and the first velocity (408) of the nearby moving object (404).

8. The method (700) of claim 7, wherein the first data further indicates accuracies of the respective observations of position and velocity, and selecting the observation includes selecting the observation that is most accurate as indicated by a highest one of the accuracies.

9. The method (700) of any of claims 1 thru 8, wherein the one or more nearby moving objects (404) are a plurality of nearby moving objects (404), and
wherein the method (700) further comprises applying the first data to a filter (510) that passes the first data for generating the vector projection for only a given number of the plurality of nearby moving objects (404), and the vector projection and thereby the predicted trajectory (410, 412) of the nearby moving object (404) is generated for each nearby moving object (404).

10. The method (700) of any of claims 1 thru 9 further comprising:
determining at least one maneuver to avoid the conflict (424); and
causing the robot (204) to execute the at least one maneuver.

11. The method (700) of any of claims 1 thru 10, wherein the robot (204) comprises an unmanned ground vehicle (UGV), an unmanned aerial vehicle (UAV), an unmanned surface vehicle (USV), an unmanned underwater vehicle (UUV), or an unmanned spacecraft.

12. A computer program comprising computer program instructions that, when executed by a computer processor, cause the computer processor to perform the method of any of claims 1 to 11.

13. A computer readable medium having stored thereon the computer program of claim 12.

14. An apparatus (800) for detecting conflict (424) along a route (402) for a robot (204) to travel, the apparatus (800) comprising:
a memory (804) having computer-readable program code stored therein; and
processing circuitry (802) configured to access the memory (804), and execute the computer-readable program code to cause the apparatus (800) to perform the method of any of claims 1 to 11.

## Patentansprüche

1. Verfahren (700), optional computerimplementiertes Verfahren, zum Erkennen von Konflikten (424) entlang einer Route (402), die ein Roboter (204) zurücklegen soll, wobei das Verfahren (700) umfasst:
Empfangen von ersten Daten, die eine erste Position (406) und eine erste Geschwindigkeit (408) eines oder mehrerer sich in der Nähe bewegender Objekte (404) anzeigen, oder aus denen die erste Position (406) und die erste Geschwindigkeit (408) der ein oder mehreren sich in der Nähe bewegenden Objekte (404) bestimmt werden, wobei die ersten Daten von einer Mehrzahl verschiedener Sensoren erfasste Sensordaten umfassen und aus mehreren Beobachtungen der ein oder mehreren sich in der Nähe bewegenden Objekte (404) gefiltert und/oder korreliert werden; und
für jedes sich in der Nähe bewegende Objekt (404) der ein oder mehreren sich in der Nähe bewegenden Objekte (404):
Erzeugen einer Vektorprojektion des sich in der Nähe bewegenden Objekts (404) von der ersten Position (406) und unter Verwendung der ersten Geschwindigkeit (408) des sich in der Nähe bewegenden Objekts (404), wobei die Vektorprojektion einer vorhergesagten Trajektorie (410, 412) des sich in der Nähe bewegenden Objekts (404) entspricht;
Erzeugen einer Trajektorie (410, 412) des Roboters (204) auf der Route (402), die der Roboter (204) zurücklegen soll, wobei die Trajektorie (410, 412) aus zweiten Daten erzeugt wird, die eine zweite Position (414) und eine zweite Geschwindigkeit (416) des Roboters (204) angeben;
Durchführen eines Vergleichs des sich in der Nähe bewegenden Objekts (404) und des Roboters (204) auf der vorhergesagten Trajektorie (410, 412) des sich in der Nähe bewegenden Objekts (404) bzw. der Trajektorie (410, 412) des Roboters (204), wobei der Vergleich durchgeführt wird, um einen Konflikt (424) zu erkennen, wenn sich das sich in der Nähe bewegende Objekt (404) innerhalb eines freien Bereichs (422) befindet, der den Roboter (204) einschließt, und eine Zeit bis zum Punkt der größten Annäherung zwischen dem sich in der Nähe bewegenden Objekt (404) und dem Roboter (204) kürzer ist als ein Zeitschwellenwert; und
wenn der Konflikt (424) erkannt wird, Ausgeben einer Anzeige des Konflikts (424) zur Verwendung bei Führung, Navigation und/oder Steuerung des Roboters (204), um den Konflikt (424) zu vermeiden;
**dadurch gekennzeichnet, dass**
das Durchführen des Vergleichs das Durchführen eines schrittweisen Vergleichs umfasst, der eine Mehrzahl von Zeitschritten umfasst, und der freie Bereich (422) eine dynamische Größe aufweist, um eine Sensorunsicherheit in einem oder mehreren Sensoren der Mehrzahl verschiedener Sensoren zu berücksichtigen, und dass der freie Bereich (422) für einen späteren der Mehrzahl von Zeitschritten im Verhältnis zu einem früheren der Mehrzahl von Zeitschritten eine unterschiedliche Größe aufweist, um eine Unsicherheit in den ersten Daten zu berücksichtigen.

2. Verfahren (700) nach Anspruch 1, bei dem die Mehrzahl unterschiedlicher Sensoren Radar-, Lidar-, Infrarot-, Kamera- oder ADS-B-Sensoren umfasst.

3. Verfahren (700) nach Anspruch 1 oder 2, bei dem die Route (402), die der Roboter (204) zurücklegen soll, durch einen Routenbefehl, einen Flugplan und/oder eine Missionsroute (402) beschrieben wird, und das Erzeugen der Trajektorie (410, 412) des Roboters (204) das Erzeugen der Trajektorie (410, 412) des Roboters (204) unter Verwendung des Routenbefehls, des Flugplans und/oder der Missionsroute (402) umfasst.

4. Verfahren (700) nach einem der Ansprüche 1 bis 3, bei dem das Empfangen der ersten Daten umfasst:
Empfangen der ersten Daten von einem Sensor, der in Wirkverbindung mit dem Roboter (204) steht, und die ein erstes Datenformat aufweisen, oder von Daten, die von dem sich in der Nähe bewegenden Objekt (404) stammen und ein zweites Datenformat aufweisen; und
Umwandeln der ersten Daten aus dem ersten Datenformat oder dem zweiten Datenformat in ein drittes Datenformat, aus dem die Vektorprojektion und dadurch die vorhergesagte Trajektorie (410, 412) des sich in der Nähe bewegenden Objekts (404) erzeugt wird.

5. Verfahren (700) nach einem der Ansprüche 1 bis 4, das ferner umfasst:
Eingeben der ersten Daten in ein Filter (510), das die ersten Daten nur dann zur Erzeugung der Vektorprojektion durchlässt, wenn die erste Position (406) des sich in der Nähe bewegenden Objekts (404) innerhalb eines gegebenen Bereichs von Interesse (418) liegt, der den Roboter (204) an der zweiten Position (414) einschließt.

6. Verfahren (700) nach einem der Ansprüche 1 bis 5, bei dem die ersten Daten ferner eine Zeit und eine Genauigkeit der ersten Daten angeben und das Verfahren (700) ferner umfasst:
Eingeben der ersten Daten in ein Filter (510), das die ersten Daten nur dann zur Erzeugung der Vektorprojektion durchlässt, wenn die Zeit innerhalb eines Zeitschwellenwerts der aktuellen Zeit liegt und die Genauigkeit innerhalb eines Genauigkeitsschwellenwerts liegt.

7. Verfahren (700) nach einem der Ansprüche 1 bis 6, bei dem die erste Position (406) und die erste Geschwindigkeit (408) Beobachtungen der Position und Geschwindigkeit sind und das Empfangen der ersten Daten umfasst:
Empfangen von Daten von mehreren Quellen, einschließlich jeweiliger Beobachtungen der Position und Geschwindigkeit der ein oder mehreren sich in der Nähe bewegenden Objekte (404);
Korrelieren der jeweiligen Beobachtungen von Position und Geschwindigkeit; und
basierend darauf, dass die jeweiligen Beobachtungen einen Schwellenwert für den Korrelationsgrad aufweisen, der anzeigt, dass die jeweiligen Beobachtungen für das sich in der Nähe bewegende Objekt (404) gelten, Auswählen einer Beobachtung von Position und Geschwindigkeit aus den jeweiligen Beobachtungen als die jeweils erste Position (406) und die erste Geschwindigkeit (408) des sich in der Nähe bewegenden Objekts (404).

8. Verfahren (700) nach Anspruch 7, bei dem die ersten Daten ferner Genauigkeiten der jeweiligen Beobachtungen von Position und Geschwindigkeit angeben und das Auswählen der Beobachtung das Auswählen derjenigen Beobachtung umfasst, die, wie durch eine höchste der Genauigkeiten angegeben, die genaueste ist.

9. Verfahren (700) nach einem der Ansprüche 1 bis 8, bei dem die ein oder mehreren sich in der Nähe bewegenden Objekte (404) eine Mehrzahl von sich in der Nähe bewegenden Objekten (404) sind und
wobei das Verfahren (700) ferner das Eingeben der ersten Daten in ein Filter (510) umfasst, das die ersten Daten zum Erzeugen der Vektorprojektion nur für eine gegebene Anzahl der Mehrzahl von sich in der Nähe bewegenden Objekten (404) durchlässt, und wobei die Vektorprojektion und dadurch die vorhergesagte Trajektorie (410, 412) des sich in der Nähe bewegenden Objekts (404) für jedes sich in der Nähe bewegende Objekt (404) erzeugt wird.

10. Verfahren (700) nach einem der Ansprüche 1 bis 9, das ferner umfasst:
Bestimmen mindestens eines Manövers zur Vermeidung des Konflikts (424); und
Veranlassen, dass der Roboter (204) das mindestens eine Manöver ausführt.

11. Verfahren (700) nach einem der Ansprüche 1 bis 10, wobei der Roboter (204) ein unbemanntes Bodenfahrzeug (UGV), ein unbemanntes Luftfahrzeug (UAV), ein unbemanntes Oberflächenfahrzeug (USV), ein unbemanntes Unterwasserfahrzeug (UUV) oder ein unbemanntes Raumfahrzeug umfasst.

12. Computerprogramm, das Computerprogrammanweisungen umfasst, die, wenn sie von einem Computerprozessor ausgeführt werden, den Computerprozessor veranlassen, das Verfahren nach einem der Ansprüche 1 bis 11 auszuführen.

13. Computerlesbares Medium, auf dem das Computerprogramm nach Anspruch 12 gespeichert ist.

14. Vorrichtung (800) zum Erkennen von Konflikten (424) entlang einer Route (402), die ein Roboter (204) zurücklegen soll, wobei die Vorrichtung (800) umfasst:
einen Speicher (804), in dem ein computerlesbarer Programmcode gespeichert ist; und
eine Verarbeitungsschaltung (802), die konfiguriert ist, um auf den Speicher (804) zuzugreifen und den computerlesbaren Programmcode auszuführen, um die Vorrichtung (800) zu veranlassen, das Verfahren nach einem der Ansprüche 1 bis 11 auszuführen.

## Revendications

1. Procédé (700), facultativement un procédé mis en œuvre par ordinateur, de détection de conflit (424) le long d'un itinéraire (402) à parcourir pour un robot (204), le procédé (700) comprenant les étapes consistant à :
recevoir des premières données qui indiquent une première position (406) et une première vitesse (408) d'un ou plusieurs objets mobiles à proximité (404), ou à partir desquelles la première position (406) et la première vitesse (408) des un ou plusieurs objets mobiles à proximité (404) sont déterminées, et dans lequel les premières données comprennent des données de capteur acquises par une variété de capteurs différents et sont filtrées et/ou corrélées à partir d'observations multiples des un ou plusieurs objets mobiles à proximité (404) ; et
pour chaque objet mobile à proximité (404) des un ou plusieurs objets mobiles à proximité (404) :
générer une projection vectorielle de l'objet mobile à proximité (404) à partir de la première position (406) et utiliser la première vitesse (408) de l'objet mobile à proximité (404), dans lequel la projection vectorielle correspond à une trajectoire prédite (410, 412) de l'objet mobile à proximité (404) ;
générer une trajectoire (410, 412) du robot (204) sur l'itinéraire (402) à parcourir pour le robot (204), dans lequel la trajectoire (410, 412) est générée à partir de secondes données qui indiquent une seconde position (414) et une seconde vitesse (416) du robot (204) ;
effectuer une comparaison de l'objet mobile à proximité (404) et du robot (204) respectivement sur la trajectoire prédite (410, 412) de l'objet mobile à proximité (404) et la trajectoire (410, 412) du robot (204), dans lequel la comparaison est effectuée pour détecter un conflit (424) lorsque l'objet mobile à proximité (404) est dans une région dégagée (422) qui comprend le robot (204), et un temps jusqu'au point d'approche le plus proche entre l'objet mobile à proximité (404) et le robot (204) est inférieur à une valeur de seuil de temps ; et,
lorsque le conflit (424) est détecté, délivrer en sortie une indication du conflit (424) pour une utilisation dans au moins un parmi un guidage, une navigation ou une commande du robot (204) pour éviter le conflit (424) ;
**caractérisé en ce que**
la réalisation de la comparaison comprend une réalisation d'une comparaison par étapes qui comprend une pluralité d'étapes temporelles, et la région dégagée (422) est de taille dynamique pour tenir compte de l'incertitude de capteur dans un ou plusieurs capteurs de la variété de capteurs différents, et **en ce que** la région dégagée (422) est de taille différente pour une ultérieure de la pluralité d'étapes temporelles par rapport à une antérieure de la pluralité d'étapes temporelles pour tenir compte d'une incertitude dans les premières données.

2. Procédé (700) selon la revendication 1, dans lequel la variété de capteurs différents comprend des capteurs radar, lidar, infrarouge, caméra ou ADS-B.

3. Procédé (700) selon la revendication 1 ou 2, dans lequel l'itinéraire (402) à parcourir pour le robot (204) est décrit par au moins un parmi une instruction d'itinéraire, un plan de vol ou un itinéraire de mission (402), et la génération de la trajectoire (410, 412) du robot (204) comprend une génération de la trajectoire (410, 412) du robot (204) en utilisant le au moins un parmi l'instruction d'itinéraire, le plan de vol ou l'itinéraire de mission (402).

4. Procédé (700) selon l'une quelconque des revendications 1 à 3, dans lequel la réception des premières données comprend les étapes consistant à :
recevoir les premières données depuis un capteur en communication opérationnelle avec le robot (204) et présentant un premier format de données, ou liées à des données de l'objet mobile à proximité (404) et présentant un deuxième format de données ; et
transformer les premières données à partir du premier format de données ou du deuxième format de données en un troisième format de données à partir duquel la projection vectorielle et ainsi la trajectoire prédite (410, 412) de l'objet mobile à proximité (404) sont générées.

5. Procédé (700) selon l'une quelconque des revendications 1 à 4, comprenant en outre l'étape consistant à :
appliquer les premières données à un filtre (510) qui laisse passer les premières données pour générer la projection vectorielle uniquement lorsque la première position (406) de l'objet mobile à proximité (404) se trouve dans une région d'intérêt donnée (418) qui inclut le robot (204) dans la seconde position (414).

6. Procédé (700) selon l'une quelconque des revendications 1 à 5, dans lequel les premières données indiquent en outre un temps et une précision des premières données, et le procédé (700) comprend en outre l'étape consistant à :
appliquer les premières données à un filtre (510) qui laisse passer les premières données pour générer la projection vectorielle uniquement lorsque le temps est à l'intérieur d'un seuil de temps du temps actuel, et la précision est à l'intérieur d'un seuil de précision.

7. Procédé (700) selon l'une quelconque des revendications 1 à 6, dans lequel la première position (406) et la première vitesse (408) sont des observations de position et de vitesse, et la réception des premières données comprend les étapes consistant à :
recevoir des données provenant de multiples sources comprenant des observations respectives de position et de vitesse des un ou plusieurs objets mobiles à proximité (404) ;
corréler les observations respectives de position et de vitesse ; et,
sur la base des observations respectives présentant au moins un degré de corrélation de seuil qui indique que les observations respectives sont pour l'objet mobile à proximité (404), sélectionner une observation de position et de vitesse à partir des observations respectives en tant que respectivement la première position (406) et la première vitesse (408) de l'objet mobile à proximité (404).

8. Procédé (700) selon la revendication 7, dans lequel les premières données indiquent en outre des précisions des observations respectives de position et de vitesse, et la sélection de l'observation inclut la sélection de l'observation qui est la plus précise comme indiqué par une la plus élevée parmi les précisions.

9. Procédé (700) selon l'une quelconque des revendications 1 à 8, dans lequel les un ou plusieurs objets mobiles à proximité (404) sont une pluralité d'objets mobiles à proximité (404), et
dans lequel le procédé (700) comprend en outre l'application des premières données à un filtre (510) qui laisse passer les premières données pour générer la projection vectorielle pour seulement un nombre donné de la pluralité d'objets mobile à proximité (404), et la projection vectorielle et ainsi la trajectoire prédite (410, 412) de l'objet mobile à proximité (404) sont générées pour chaque objet mobile à proximité (404).

10. Procédé (700) selon l'une quelconque des revendications 1 à 9, comprenant en outre les étapes consistant à :
déterminer au moins une manœuvre pour éviter le conflit (424) ; et
amener le robot (204) à exécuter la au moins une manœuvre.

11. Procédé (700) selon l'une quelconque des revendications 1 à 10, dans lequel le robot (204) comprend un véhicule terrestre sans pilote (UGV), un véhicule aérien sans pilote (UAV), un véhicule de surface sans pilote (USV), un véhicule sous-marin sans pilote (UUV) ou un engin spatial sans pilote.

12. Programme informatique comprenant des instructions de programme informatique qui, lorsqu'elles sont exécutées par un processeur informatique, amènent le processeur informatique à exécuter le procédé selon l'une quelconque des revendications 1 à 11.

13. Support lisible par ordinateur sur lequel est stocké le programme informatique selon la revendication 12.

14. Appareil (800) pour détecter un conflit (424) le long d'un itinéraire (402) à parcourir pour un robot (204), l'appareil (800) comprenant :
une mémoire (804) dans laquelle est stocké un code de programme lisible par ordinateur ; et
des circuits de traitement (802) configurés pour accéder à la mémoire (804), et exécuter le code de programme lisible par ordinateur pour amener l'appareil (800) à exécuter le procédé selon l'une quelconque des revendications 1 à 11.
